# EUROPÄISCHE PATENTANMELDUNG

(11) **EP 3 370 184 A1**
(43) Veröffentlichungstag der Anmeldung: **05.09.2018**
(21) Anmeldenummer: 17158668.8
(22) Anmeldetag: 01.03.2017
(51) Int. Cl.: G06K 7/00, G06K 13/08

(54) **KARTENLESER MIT ENDSEITIG REDUZIERTER KARTENSCHACHTHÖHE**

(71) Anmelder: ddm hopt + schuler GmbH & Co. KG., 78628 Rottweil (DE)
(72) Erfinder: HOPT, Karl-Rudolf, 78628 Rottweil (DE)
(74) Vertreter: Kohler Schmid Möbus Patentanwälte

(57) **Zusammenfassung**

Bei einem Kartenleser (1) mit einer Kontaktiereinheit (11) zum Datenaustausch mit einer in einen Kartenschacht (9) des Karteniesers (1) eingeführten Karte (2), insbesondere Chipkarte, deren Kartendicke (D₁, D₂) an dem in Einführrichtung (3) vorderen Kartenende (2a) kleiner als an einem sich daran anschließenden, dickeren Kartenabschnitt (2b) ist, und mit einem Kartenendlagenschalter (13), der von einer bis zum Ende des Kartenschachts (9) eingeführten Karte (2) betätigt wird, ist erfindungsgemäß am Ende des Kartenschachts (9) die Kartenschachthöhe zumindest im Bereich des Kartenendlagensehalters (13) auf eine Höhe (H₂) kleiner als die Kartendicke (D2) des dickeren Kartenabschnitts (2b) reduziert.

## Beschreibung

Die vorliegende Erfindung betrifft einen Kartenleser mit einer Kontaktiereinheit zum Datenaustausch mit einer in einen Kartenschacht des Kartenlesers eingeführten Karte, insbesondere Chipkarte, deren Kartendicke an dem in Einführrichtung vorderen Kartenende kleiner als an einem sich daran anschließenden, dickeren Kartenabschnitt ist, und mit einem Kartenendlagenschalter, der von einer bis zum Ende des Kartenschachts eingeführten Karte betätigt wird.

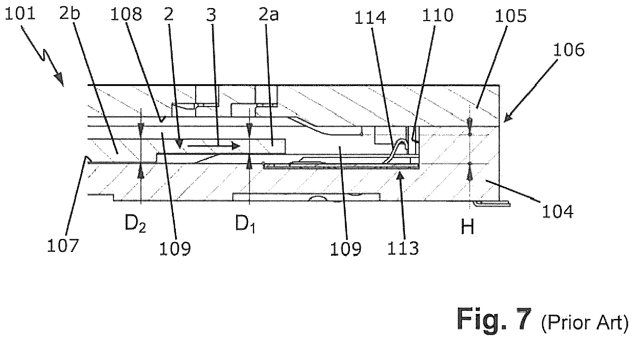

Ein derartiger Kartenleser ist hinlänglich bekannt. **Fig. 7** zeigt einen Längsschnitt durch einen solchen bekannten Push/Pull-Kartenleser **101,** bei dem eine Chipkarte **2** durch den Benutzer in Einführrichtung **3** über einen Einführschlitz in den Kartenleser 101 bis in ihre Datenaustauschposition eingeführt und nach dem Datenaustausch vom Benutzer wieder aus dem Kartenleser 101 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind.

Der Kartenleser 101 weist ein aus einem Gehäuseunterteil **104** und einem Gehäuseoberteil (Gehäusedeckel) **105** zusammengesetztes Kartenlesergehäuse **106** auf. Der Boden **107** des Gehäuseunterteils 104 sowie die Decke **108** und zwei seitliche Führungswände (nicht gezeigt) des Gehäuseoberteils 105 definieren im Kartenlesergehäuse 106 einen Kartenschacht **109,** in den die Karte 3 in Einführrichtung 3 bis in ihre Datenaustauschposition eingeschoben wird, in der sie an einem Endanschlag **110** des Gehäuseunterteils 104 anliegt. Das Gehäuseunterteil 104 weist zum Kontaktieren der elektrischen Kontaktfelder der Chipkarte 2 eine Kontaktiereinheit (nicht gezeigt) in Form von elastisch verformbaren Kontaktfedern auf, die in die Kartenbahn hineinragen. Durch die eingeführte Chipkarte 2 werden die Kontaktfedern aus der Kartenbahn ausgelenkt und gleiten dann auf der Kartenoberfläche, bis sie in der Datenaustauschposition die elektrischen Kontaktfelder der eingeführten Chipkarte 2 für einen Datenaustausch kontaktieren. Das Gehäuseunterteil 104 trägt im Boden 107 einen Kartenendlagenschalter **113** mit einem Schalthebel **114,** der am Ende des Kartenschachts 109 in Richtung der Kartenschachthöhe, also in Fig. 7 nach oben, in den Kartenschacht 109 hineinragt. Der Schalthebel 114 wird durch eine am Endanschlag 110 anliegende Chipkarte 2 aus der Kartenbahn ausgelenkt, wodurch der Kartenendlagenschalter 113 geschaltet wird, der wiederum den Datenaustauch auslöst.

Die Kartendicke **D1** des in Karteneinführrichtung 3 vorderen Kartenendes **2a** (wie auch am hier nicht gezeigten hinteren Kartenende) beträgt bei einer Standardkarte 0,76±0,08 mm und ist kleiner als im mittleren Kartenabschnitt **2b,** dessen Kartendicke **D2** durch Kartenprägungen auf der Kartenunterseite (Embossing) auf ca. 1,3-1,4 mm vergrößert ist. Der Einführschlitz des Kartenschachtes muss daher ca. 1,5 mm hoch sein, so dass aus Vandalismus oder zu Manipulationszwecken Gegenstände (Messer, Blechstreifen, usw.), deren vorderes Ende dicker als bei der Standardkarte (0,76+/-0,08 mm) ist, in den Kartenschacht 109 n(Schachthöhe **H** = 1,55 mm) eingeführt werden können und den Schalthebel 114 betätigen. Manche Kartenbenutzer kleben eine eingerissene Karte auch mit Tesafilm ab, wodurch sich in diesem Bereich die Kartendicke oft über 1,1 mm erhöht. Die Belastung des Schalthebels 114 ist aber nur für die Auslenkung durch das vordere Kartenende 2a ausgelegt, also nur für eine Karte mit einer Dicke von maximal 1,0-1,1 mm. Selbst nach einem Dauertest (650.000 Zyklen) mit einer Standardkarte ist keine negative Beeinträchtigung am Schalthebel 114 festzustellen. Wird jedoch ein Gegenstand mit einem vorderen Ende dicker als 1,1 mm eingeführt, wird der Schalthebel 114 plastisch verformt und somit der Schaltpunkt beeinträchtigt oder zerstört.

Es ist daher die Aufgabe der vorliegenden Erfindung, bei einem Kartenleser der eingangs genannten Art solche Beschädigungen des Kartenendlagenschalters zuverlässig zu verhindern.

Diese Aufgabe wird erfindungsgemäß dadurch gelöst, dass am Ende des Kartenschachts die Kartenschachthöhe zumindest im Bereich des Kartenendlagenschalters auf eine Höhe kleiner als die Kartendicke des dickeren Kartenabschnitts reduziert ist.

Erfindungsgemäß können in den Bereich des Kartenendlagenschalters somit nur noch Gegenstände mit einem der reduzierten Kartenschachthöhe entsprechenden Dicke eingeführt werden, wodurch eine Schädigung des Kartenendlagenschalters durch übermäßige Auslenkung ausgeschlossen ist. Die reduzierte Höhe kann beispielsweise etwa dem Mittelwert der Kartendicke des vorderen Kartenendes und des dickeren Kartenabschnitts entsprechen.

Besonders bevorzugt ist die Kartenschachthöhe zu beiden Seiten des Kartenendlagenschalters, insbesondere entlang der gesamten Kartenschachtbreite zumindest abschnittweise, auf die Höhe kleiner als die Kartendicke des dickeren Kartenabschnitts reduziert.

Im Falle einer Standardkarte, deren beide Kartenenden eine Kartendicke von ca. 0,7-0,8 mm und deren dickerer, mittlerer Kartenabschnitt eine Kartendicke von 1,2-1,4 mm aufweist, beträgt die reduzierte Kartenschachthöhe vorteilhafterweise ca. 1,0 mm, so dass nur Gegenstände mit einer Dicke von max. 1 mm den Kartenendlagenschalter auslösen können.

Vorzugsweise weist der Kartenendlagenschalter einen am Ende des Kartenschachts in Richtung der Kartenschachthöhe in den Kartenschacht hineinragenden Schaltbetätiger, z.B. einen Schalthebel, auf.

Die reduzierte Kartenschachthöhe kann durch ein oder mehrere separate Teile, die am Kartenlesergehäuse befestigt sind und in den Kartenschacht eingreifen, oder aber, was bevorzugt ist, durch mindestens einen am Kartenlesergehäuse integral vorhandenen Vorsprung gebildet sein, der in den Kartenschacht eingreift und ein Gegenlager für die eingeführte Karte bildet.

Bei einem Kartenlesergehäuse, das aus einem Gehäuseunterteil und einem Gehäuseoberteil zusammengesetzt ist, kann der mindestens eine Vorsprung am Gehäuseunterteil oder am Gehäuseoberteil angeordnet sein. Im Fall von mehreren Vorsprüngen können die Vorsprünge auch an beiden Gehäuseteilen angeordnet sein.

Alternativ oder zusätzlich zu den gehäuseseitigen Vorsprüngen kann der Kartenschacht auch durch mindestens einen am Kartenendlagenschalter, insbesondere an einem Abdeckblech des Kartenendlagenschalters, angeordneten Vorsprung gebildet sein, der in den Kartenschacht eingreift.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine perspektivische Ansicht des Gehäuseunterteils eines ersten erfindungsgemäßen Kartenlesers mit einer vergrößerten Detailansicht eines Kartenendlagenschalters;
- Fig. 2: einen Längsschnitt durch den in Fig. 1 gezeigten Kartenleser im Bereich des Kartenendlagenschalters;
- Fig. 3: eine perspektivische Ansicht des Gehäuseoberteils eines zweiten erfindungsgemäßen Kartenlesers mit einer vergrößerten Detailansicht eines Kartenendlagenschalters;
- Fig. 4: einen Längsschnitt durch den in Fig. 3 gezeigten Kartenleser im Bereich des Kartenendlagenschalters;
- Fig. 5: eine perspektivische Ansicht des Gehäuseunterteils eines dritten erfindungsgemäßen Kartenlesers mit einer vergrößerten Detailansicht eines Kartenendlagenschalters;
- Fig. 6: ein Abdeckblech eines modifizierten Kartenendlagenschalters; und
- Fig. 7: einen Längsschnitt durch einen Kartenleser gemäß Stand der Technik im Bereich eines Kartenendlagenschalters.

In der folgenden Beschreibung der Zeichnung werden für gleiche bzw. funktionsgleiche Bauteile identische Bezugszeichen verwendet.

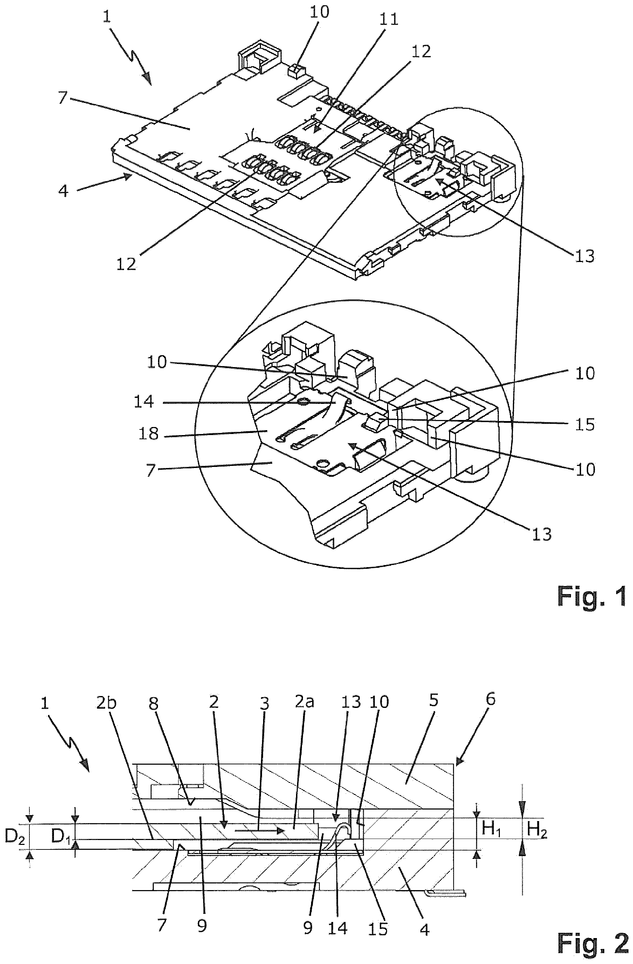

Der in **Fign. 1 und 2** gezeigte Kartenleser **1** ist ein so genannter Push/Pull-Kartenleser, bei dem eine Chipkarte **2** durch den Benutzer in Einführrichtung **3** über einen Einführschlitz in den Kartenleser 1 bis in ihre Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind.

Der Kartenleser 1 weist ein aus einem Gehäuseunterteil **4** und einem Gehäuseoberteil (Gehäusedeckel) **5** zusammengesetztes Kartenlesergehäuse **6** auf; alternativ könnte das Kartenlesergehäuse 6 aber auch einteilig ausgeführt sein. Der Boden **7** des Gehäuseunterteils 4 sowie die Decke **8** und zwei seitliche Führungswände (nicht gezeigt) des Gehäuseoberteils 5 definieren im Kartenlesergehäuse 6 einen Kartenschacht **9,** in den die Chipkarte 2 in Einführrichtung 3 bis in ihre Datenaustauschposition eingeschoben wird, in der sie an einem oder, wie gezeigt, an mehreren, miteinander fluchtenden Endanschlägen **10** des Gehäuseunterteils 4 anliegt.

Das Gehäuseunterteil 4 weist zum Kontaktieren der elektrischen Kontaktfelder der Chipkarte 2 eine Kontaktiereinheit **11** mit acht Kontakten **12** auf, die als elastisch verformbare Kontaktfedern ausgebildet und in zwei in Einführrichtung 3 hintereinander angeordneten, parallelen Reihen mit jeweils vier Kontakten gruppiert sind. Die Kontakte 12 ragen in die Kartenbahn hinein, so dass sie durch die eingeführte Chipkarte 2 aus der Kartenbahn ausgelenkt werden und dann auf der Kartenoberfläche gleiten, bis sie in der Datenaustauschposition die elektrischen Kontaktfelder der eingeführten Chipkarte 2 für einen Datenaustausch kontaktieren. Das Gehäuseunterteil 4 trägt im Boden 7 einen Kartenendlagenschalter **13** mit einem Schalthebel **14,** der am Ende des Kartenschachts 9 in Richtung der Kartenschachthöhe, also in Fig. 2 nach oben, in den Kartenschacht 9 hineinragt. Der Schalthebel 14 wird durch eine am Endanschlag 10 anliegende Chipkarte 2 aus der Kartenbahn nach unten ausgelenkt, wodurch der Kartenendlagenschalter 13 geschaltet wird, der wiederum den Datenaustauch auslöst.

Die Kartendicke **D1** des in Karteneinführrichtung 3 vorderen Kartenendes **2a** (wie auch am hier nicht gezeigten hinteren Kartenende) beträgt bei einer Standardkarte 0,76±0,08 mm und ist kleiner als im mittleren Kartenabschnitt **2b,** dessen Kartendicke **D2** durch Kartenprägungen auf der Kartenunterseite (Embossing) auf ca. 1,3-1,4 mm vergrößert ist. Zum Einführen einer Karte in den Kartenschacht 9 betragen daher die Schlitzbreite des hier nicht gezeigten Einführschlitzes und die Kartenschachthöhe **H₁** jeweils ca. 1,55 mm. Lediglich am Ende des Kartenschachts 9 ist die Kartenschachthöhe **H₂** im Bereich des Kartenendlagenschalters 13 auf kleiner als die Kartendicke D₂ des dickeren mittleren Kartenabschnitts 2b reduziert, also beispielsweise auf 1,0 mm. Diese reduzierte Höhe H₂ ist durch einen am Boden 7 des Gehäuseunterteils 4 integral ausgebildeten Vorsprung **15** mit vorgeordneter Auflaufschräge gebildet, der seitlich neben dem Schalthebel 14 nach oben in den Kartenschacht 9 eingreift und somit ein Gegenlager für die eingeführte Chipkarte 2 bildet. Durch den Vorsprung 15 ist sichergestellt, dass nur Gegenstände mit einer Dicke von max. 1 mm den Schalthebel 14 auslösen können.

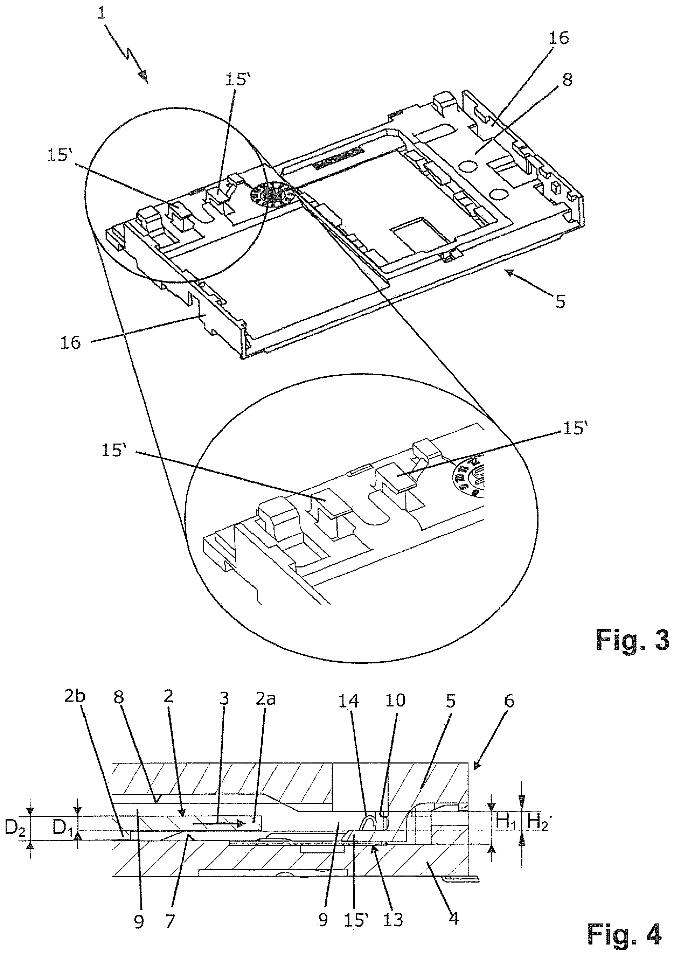

Vom Kartenleser 1 der Fign. 1 und 2 unterscheidet sich der in **Fign. 3 und 4** gezeigte Kartenleser 1 dadurch, dass hier die reduzierte Höhe H₂ durch zwei an der Decke 8 des Gehäuseoberteils 5 integral ausgebildete Vorsprünge **15'** mit jeweils vorgeordneten Auflaufschrägen gebildet ist, die zu beiden Seiten des Schalthebels 14 hakenförmig in den Kartenschacht 9 eingreifen und somit das Gegenlager für die eingeführte Chipkarte 2 bilden. Durch ihre Hakenform greifen die Vorsprünge 15' nach oben in Kartenschacht 9 ein, so dass-wie auch beim Kartenleser der Fign. 1 und 2 - die eingeführte Chipkarte 2 auf dem Gegenlager aufliegt. In Fig. 3 sind auch die beiden seitlichen Führungswände 16 des Gehäuseoberteils 5 gezeigt.

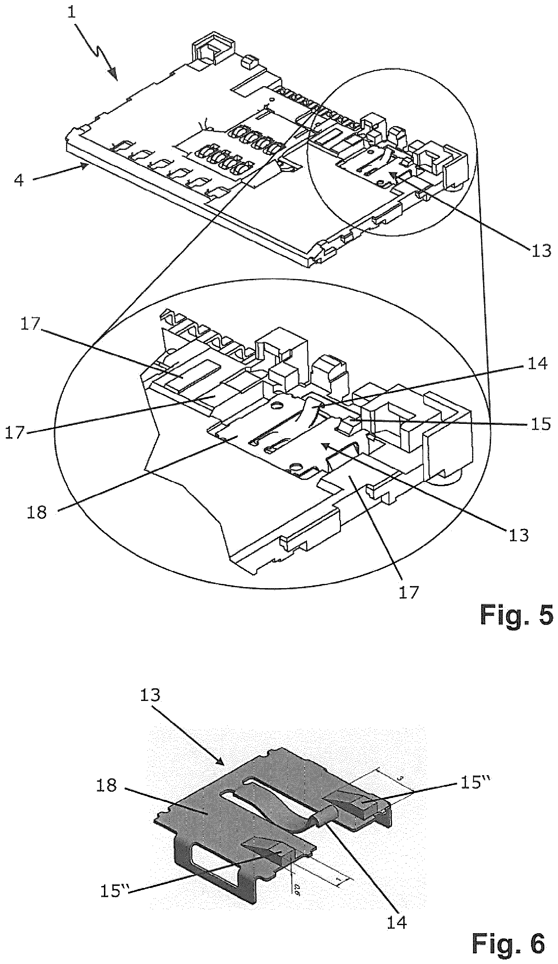

Vom Kartenleser 1 der Fign. 1 und 2 unterscheidet sich der in Fig. 5 gezeigte Kartenleser 1 dadurch, dass hier am Ende des Kartenschachts 9 die Kartenschachthöhe entlang der gesamten Kartenschachtbreite auf die Höhe H₂ reduziert ist, nämlich durch den einen Vorsprung 15 und durch drei weitere, flächige Vorsprünge **17,** die am Boden 8 des Gehäuseunterteils 4 hochstehen und jeweils vorgeordnete Auflaufschrägen aufweisen.

Wie in Fign. 1 und 5 gezeigt, ist der Schalthebel 14 integral an einem gestanzten Abdeckblech **18** des Kartenendlagenschalters 3 gebildet. Bei dem **Fig. 6** gezeigten modifizierten Kartenendlagenschalter 13 ist die reduzierte Höhe H₂ durch zwei in das Abdeckblech 18 eingestanzte Vorsprünge **15"** mit vorgeordneter Auflaufschräge gebildet, die zu beiden Seiten des Schalthebels 14 angeordnet sind.

## Patentansprüche

1. Kartenleser (1) mit einer Kontaktiereinheit (11) zum Datenaustausch mit einer in einen Kartenschacht (9) des Kartenlesers (1) eingeführten Karte (2), insbesondere Chipkarte, deren Kartendicke (D₁, D₂) an dem in Einführrichtung (3) vorderen Kartenende (2a) kleiner als an einem sich daran anschließenden, dickeren Kartenabschnitt (2b) ist, und mit einem Kartenendlagenschalter (13), der von einer bis zum Ende des Kartenschachts (9) eingeführten Karte (2) betätigt wird,
**dadurch gekennzeichnet,**
**dass** am Ende des Kartenschachts (9) die Kartenschachthöhe zumindest im Bereich des Kartenendlagenschalters (13) auf eine Höhe (H₂) kleiner als die Kartendicke (D₂) des dickeren Kartenabschnitts (2b) reduziert ist.

2. Kartenleser nach Anspruch 1, **dadurch gekennzeichnet, dass** die reduzierte Höhe (H₂) etwa dem Mittelwert der Kartendicke (D₁, D₂) des vorderen Kartenendes (2a) und des dickeren Kartenabschnitts (2b) entspricht.

3. Kartenleser nach Anspruch 1 oder 2, **dadurch gekennzeichnet, dass** die Kartenschachthöhe zu beiden Seiten des Kartenendlagenschalters (13) auf die Höhe (H₂) kleiner als die Kartendicke (D₂) des dickeren Kartenabschnitts (2b) reduziert ist.

4. Kartenleser nach einem der vorhergehenden Ansprüche, **dadurch gekennzeichnet, dass** die Kartenschachthöhe entlang der gesamten Kartenschachtbreite zumindest abschnittweise auf die Höhe (H₂) kleiner als die Kartendicke (D₂) des dickeren Kartenabschnitts (2b) reduziert ist.

5. Kartenleser nach einem der vorhergehenden Ansprüche, **dadurch gekennzeichnet, dass** die Kartendicke (D₁) des vorderen Kartenendes (2a) ca. 0,7-0,8 mm, die Kartendicke (D₂) des dickeren Kartenabschnitts (2b) ca. 1,2-1,4 mm und die reduzierte Kartenschachthöhe (H₂) ca. 1,0 mm beträgt.

6. Kartenleser nach einem der vorhergehenden Ansprüche, **dadurch gekennzeichnet, dass** der Kartenendlagenschalter (13) einen am Ende des Kartenschachts (9) in Richtung der Kartenschachthöhe (H₁, H₂) in den Kartenschacht (9) hineinragenden Schaltbetätiger (14) aufweist.

7. Kartenleser nach einem der vorhergehenden Ansprüche, **dadurch gekennzeichnet, dass** der Kartenschacht (9) durch mindestens einen am Karteniesergehäuse angeordneten Vorsprung (15; 15'; 17) gebildet ist, der in den Kartenschacht (9) eingreift.

8. Kartenleser nach Anspruch 7, **dadurch gekennzeichnet, dass** das Kartenlesergehäuse (6) aus einem Gehäuseunterteil (4) und einem Gehäuseoberteil (5) zusammengesetzt ist und der mindestens eine Vorsprung (15; 15'; 17) am Gehäuseunterteil (4) oder am Gehäuseoberteil (5) angeordnet ist.

9. Kartenleser nach Anspruch 7 oder 8, **dadurch gekennzeichnet, dass** der mindestens eine Vorsprung (15; 15'; 17) von der gleichen Seite wie ein Schaltbetätiger (14) des Kartenendlagenschalters (13) in den Kartenschacht (9) eingreift.

10. Kartenleser nach einem der vorhergehenden Ansprüche, **dadurch gekennzeichnet, dass** der Kartenschacht (9) durch mindestens einen am Kartenendlagenschalter (13), insbesondere an einem Abdeckblech (18) des Kartenendlagenschalters (13), angeordneten Vorsprung (15") gebildet ist, der in den Kartenschacht (9) eingreift.
